# EUROPEAN PATENT APPLICATION

(11) **EP 4 550 556 A1**
(43) Date of publication of application: **07.05.2025**
(21) Application number: 23868541.6
(22) Date of filing: 18.09.2023
(51) Int. Cl.: H01M 50/333, H01M 50/24, H01M 50/342, H01M 50/244, H01M 50/209, H01M 50/249

(54) **BATTERY PACK HAVING VARIABLE COUPLING PORTION FOR PREVENTING STRUCTURAL COLLAPSE**

(30) Priority: 19.09.2022 KR 20220117728
(71) Applicant: LG Energy Solution, Ltd., Seoul 07335 (KR)
(72) Inventor: LEE, Jung-Hoon, Daejeon 34122 (KR); PARK, Min-Soo, Daejeon 34122 (KR)
(74) Representative: Plasseraud IP
(86) International application number: PCT/KR2023/014098
(87) International publication number: WO 2024/063489

(57) **Abstract**

A battery pack according to the present disclosure may include: a battery module; a pack tray configured to accommodate the battery module therein and have a top opening; a pack cover disposed on the top of the pack tray to seal an accommodation space where the battery module is accommodated; and a variable coupling part configured to connect the pack tray and the pack cover to each other and elastically couple the pack cover to the pack tray such that the accommodation space is variably expanded in response to an increase in pressure when an event occurs.

## Description

### TECHNICAL FIELD

The present application claims priority to Korean Patent Application No. 10-2022-0117728 filed on September 19, 2022 in the Republic of Korea, the disclosures of which are incorporated herein by reference.

The present disclosure relates to a battery pack, and more specifically, it relates to a battery pack capable of delaying the structural collapse of the battery pack when thermal energy is accumulated and the internal pressure increases by venting gas or flame generated from the internal ignition of the battery module.

### BACKGROUND ART

Semi-permanent batteries that convert electrical energy into chemical energy and can be repeatedly charged and discharged are called secondary batteries distinguished from primary batteries that cannot be reused after one use.

Secondary batteries include lithium secondary batteries, nickel-cadmium (Ni-Cd) batteries, lead-acid batteries, nickel-hydride (Ni-MH) batteries, zinc-air batteries, and alkaline manganese batteries. Among these, lead-acid batteries and lithium secondary batteries are the most widely commercialized secondary batteries.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than the appropriate temperature, and failure of heat control to an appropriate temperature is likely to lead to unexpected ignition or explosion. In addition, since the battery module has a structure in which the secondary batteries are intensively stored inside a module housing, if any one secondary battery becomes a trigger cell due to heat propagation, it may transfer to the lithium secondary batteries and a chain reaction may occur, thereby generating a large amount of venting gas, flame, and high-temperature particles including electrode active materials and aluminum particles. The venting gas, flame, and high-temperature sparks accumulate thermal energy inside the battery pack, as well as inside the battery module, and increase internal pressure thereof, ultimately causing the structural collapse or explosion of the battery pack.

Accordingly, structural improvement is required to delay structural collapse of the battery pack as long as possible and block propagation of thermal energy by effectively dispersing and efficiently discharging the pressure and thermal energy inside the battery pack before venting gas and flame generated from the initially ignited battery module are emitted and transfer to neighboring battery modules and the entire battery pack.

### DISCLOSURE

### Technical Problem

The present disclosure has been designed to solve the problems of the related art, and therefore the present disclosure is directed to providing a battery pack capable of delaying structural collapse of the battery pack as long as possible and blocking propagation of thermal energy by effectively dispersing and efficiently discharging the pressure and thermal energy inside the battery pack before venting gas and flames generated from the initially ignited battery module are emitted and transfer to neighboring battery modules and the battery pack.

The technical problems that the present disclosure seeks to solve are not limited to the above-mentioned problems, and other problems not mentioned above will be clearly understood by those skilled in the art from the description of the invention described below.

### Technical Solution

A battery pack according to the present disclosure may include: a battery module; a pack tray configured to accommodate the battery module therein and have a top opening; a pack cover disposed on the top of the pack tray to seal an accommodation space where the battery module is accommodated; and a variable coupling part configured to connect the pack tray and the pack cover to each other and elastically couple the pack cover to the pack tray such that the accommodation space is variably expanded in response to an increase in pressure when an event occurs.

The pack tray may have a horizontal partition wall and a vertical partition wall configured to partition the interior of the pack tray, and the variable coupling part may include: an expansion bolt having one end that protrudes outwards from the pack cover and the other end that passes through the pack cover and is coupled to at least one of the horizontal partition wall and the vertical partition wall; and an elastic member provided between the pack cover and one end of the expansion bolt to elastically bias the pack cover in one direction.

The variable coupling part may further include a coupling housing provided on the pack cover and surrounding at least a portion of the elastic member and the expansion bolt.

The coupling housing may be a tubular body having a guiding hole formed in the longitudinal direction thereof.

The elastic member may be a compression spring that provides resistance when the pack cover is compressed toward a head provided at one end of the expansion bolt.

The coupling housing may be manufactured integrally with the pack cover.

An elastic modulus of the elastic member may increase toward the central area of the pack cover.

A gas outlet through which the venting gas is discharged may be provided on a wall of the pack tray.

A rupture membrane may be provided in the gas outlet, and a discharge slit configured to rupture when an allowable pressure or more is applied thereto may be provided in the rupture membrane.

The discharge slit may be configured in the form of a 1-shaped or I-shaped incision in a dotted line.

The pack cover may include a first pack cover adjacent to the battery module and a second pack cover disposed above the first pack cover so as to be spaced a predetermined distance apart from the first pack cover.

The variable coupling part may include: an expansion bolt having one end coupled to the horizontal partition wall and the vertical partition wall; a first elastic member provided between the first pack cover and the second pack cover to space the first pack cover and the second pack cover apart from each other; a second elastic member provided between the second pack cover and the expansion bolt to elastically bias the second pack cover in one direction; and a coupling housing provided on the second pack cover and accommodating the second elastic member and the expansion bolt therein.

The pack cover may include: a left pack cover provided on the left side of the vertical partition wall; and a right pack cover provided on the right side of the vertical partition wall, and the variable coupling part may be provided in the central area of the left pack cover and in the central area of the right pack cover.

According to another aspect of the present disclosure, there may be provided a vehicle including the battery pack.

### Advantageous Effects

According to one aspect of the present disclosure, it is possible to delay structural collapse of the battery pack as long as possible and block propagation of thermal energy by effectively dispersing and efficiently discharging the pressure and thermal energy inside the battery pack before venting gas and flames generated from the initially ignited battery module are emitted and transfer to neighboring battery modules and the entire battery pack.

In addition, even if a situation changes suddenly due to an event, a variable coupling part may perform a buffering function to cushion the impact, thereby preventing the structural collapse of the battery pack.

In addition, it is possible to lower stress concentration at a bolt joint due to leakage pressure of gas generated when an event occurs, thereby reducing maintenance costs of the battery pack.

The effects of the present disclosure are not limited to the effects described above, and the effects not mentioned above will be clearly understood by those skilled in the art to which the present disclosure pertains from this specification and the accompanying drawings.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a schematic perspective view of a battery pack according to an embodiment of the present disclosure.
FIG. 2 is an exploded perspective view of the primary elements of the battery pack in FIG. 1.
FIG. 3 is a schematic top view of a battery pack according to an embodiment of the present disclosure.
FIG. 4 is a longitudinal cross-sectional view of the battery pack taken along line A-A' in FIG. 3.
FIG. 5 is a longitudinal cross-sectional view of a variable coupling part of a battery pack according to an embodiment of the present disclosure.
FIG. 6 is a partially perspective view of a gas outlet region according to an embodiment of the present disclosure.
FIGS. 7 and 8 are diagrams schematically illustrating the operation state of a variable coupling part when venting gas and thermal energy spread in a battery pack according to an embodiment of the present disclosure.
FIG. 9 is a traverse cross-sectional view of a gas outlet and a rupture membrane in a battery pack according to an embodiment of the present disclosure.
FIG. 10 is a diagram illustrating a double pack cover and a variable coupling part according to another embodiment of the present disclosure.
FIG. 11 is a top view of a battery pack provided with left and right pack covers, respectively, according to another embodiment of the present disclosure.
FIG. 12 is a diagram schematically illustrating the operation state of a variable coupling part when venting gas and thermal energy spread in the battery pack in FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configuration proposed in the embodiments and drawings of this specification indicates only the most preferable embodiment of the present disclosure and does not represent all technical ideas of the present disclosure, so it should be understood that various equivalents and modifications could be made thereto at the time of filing the application.

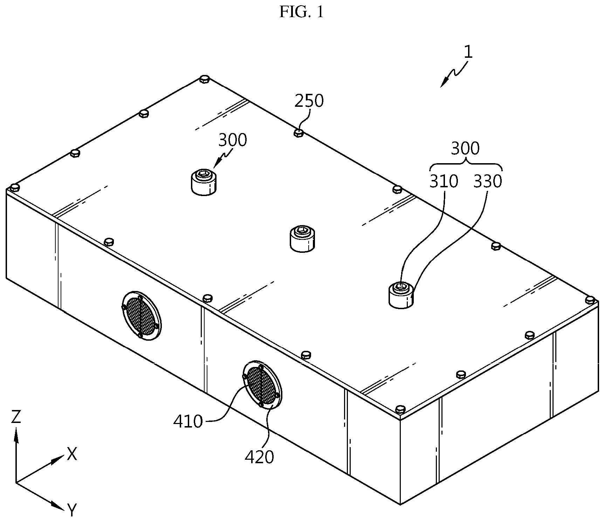

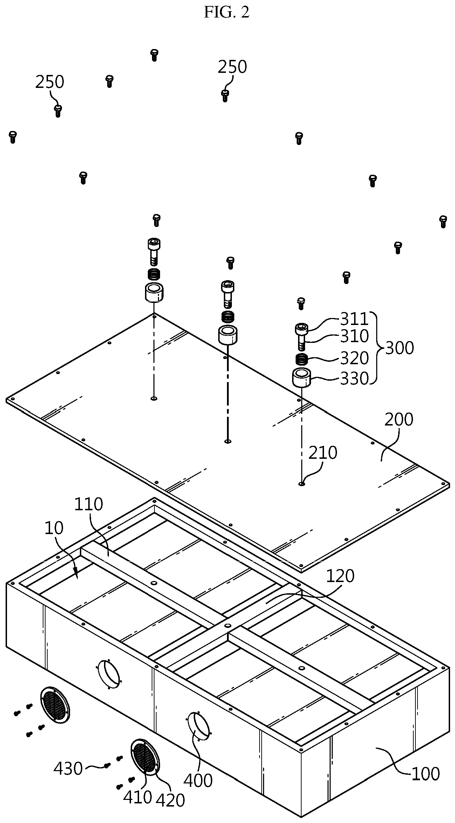

FIG. 1 is a schematic perspective view of a battery pack according to an embodiment of the present disclosure, and FIG. 2 is an exploded perspective view of the primary elements of the battery pack in FIG. 1.

The battery pack 1 according to this embodiment may include a battery module 10, a pack tray 100 that accommodates the battery module 10 therein and has a top opening, a pack cover 200 disposed on the top of the pack tray 100 so as to seal an accommodation space 220 in which the battery module 10 is accommodated, and a variable coupling part 300 that couples the pack tray 100 and the pack cover 200 to each other and elastically couples the pack cover 200 to the pack tray 100 such that the accommodation space 220 is variably expanded in response to an increase in the pressure of venting gas generated from the battery module 10 when an event occurs.

The battery module 10 includes a cell assembly produced by stacking battery cells, and a module case 12 for accommodating the cell assembly.

The pack tray 100 is a component to protect the battery modules 10 from external impacts or the like and may be made of a material with excellent mechanical rigidity. As shown in FIGS. 1 and 2, an accommodation space 220 is provided to accommodate at least one battery module 10 therein.

The pack tray 100 has a horizontal partition wall 110 (in the Y-axis direction) and a vertical partition wall 120 (in the X-axis direction) that partition the interior of the pack tray 100. In addition, the heights of the horizontal partition wall 110 and vertical partition wall 120 are configured to be greater than the height of the battery module 10. As shown in FIG. 2, the horizontal partition wall 110 and the vertical partition wall 120 protrude in the Z-axis direction more than the top surface of the battery module 10 accommodated in the pack tray 100, and the pack cover 200 covers the same to provide an accommodation space 220 equal to the separation gap between the battery module 10 and the pack cover 200. Meanwhile, although one horizontal partition wall 110 along the Y axis and one vertical partition wall 120 along the X axis are provided inside the pack tray 100 to accommodate four battery modules 10 in this embodiment, the scope of the present disclosure is not limited to the number of horizontal partition walls 110 and vertical partition walls 120 or the number of battery modules 10 accommodated in this embodiment.

The pack cover 200 is disposed on the top of the pack tray 100 to seal the accommodation space 220 where the battery module 10 is accommodated. In this embodiment, the pack cover 200 may be provided to completely cover the four battery modules 10, and the pack cover 200 may be made of aluminum or SUS and may have a slight curvature formed on the plate surface because bending or sagging thereof may occur depending on a change in internal pressure.

The pack cover 200 has a plurality of bolt coupling holes 210 formed thereon. The bolt coupling holes 210 are provided in the central area of the pack cover 200 corresponding to the horizontal partition wall 110 and the vertical partition wall 120, as well as in the edge area of the pack cover 200. The bolt coupling hole 210 may have a size corresponding to the size of a bolt to be used, and in the case where the size or length of the expansion bolt 310 is greater than that of a fixing bolt 250 in this embodiment, the bolt coupling hole 210 in the central area may be configured larger and deeper than the bolt coupling hole 210 at the edge.

The pack cover 200 is bolted to the top of the pack tray 100. The pack cover 200 is bolted to the pack tray 100 at the edge of the battery pack 1 using fixing bolts 250, thereby firmly fixing the same. Here, the central area of the pack cover 200 is not bolted through the fixing bolts 250.

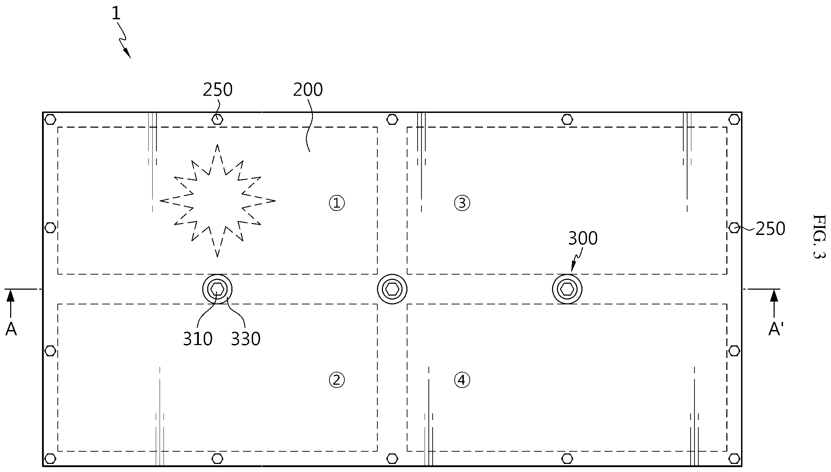

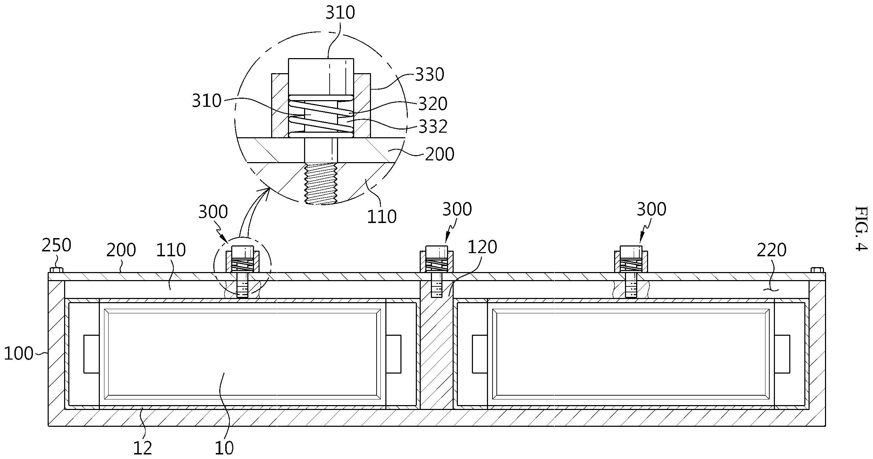

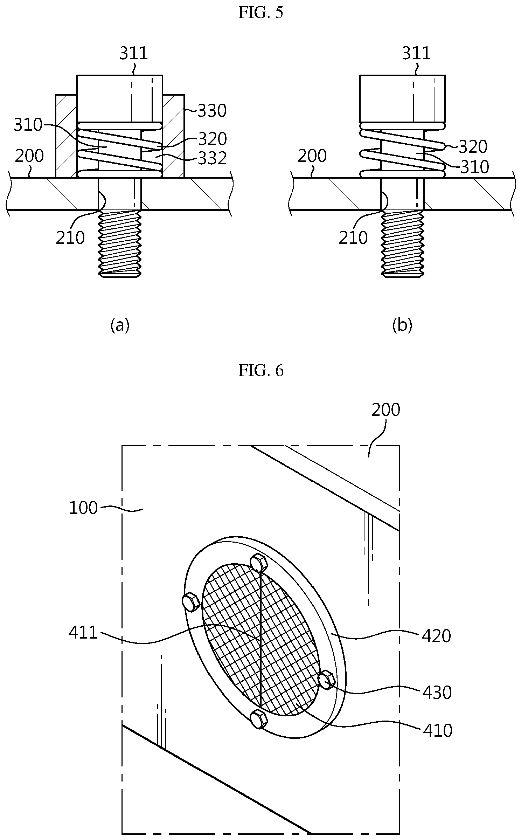

FIG. 3 is a schematic top view of a battery pack according to an embodiment of the present disclosure, FIG. 4 is a longitudinal cross-sectional view of the battery pack taken along line A-A' in FIG. 3, FIG. 5 is a longitudinal cross-sectional view of a variable coupling part of a battery pack according to an embodiment of the present disclosure, and FIG. 6 is a partially perspective view of a gas outlet 400 region according to an embodiment of the present disclosure.

In the case where the pack tray 100 and the pack cover 200 are bolted through the entire area thereof using the fixing bolts 250, if an event in which the venting gas and flame generated from the initially ignited battery module 10 spread inside the battery pack 10 occurs, they may not be able to withstand the accumulated internal pressure, resulting in structural collapse or explosion of the battery pack 1. Accordingly, in this embodiment, the variable coupling part 300 is disclosed.

The variable coupling part 300 elastically couples the pack cover 200 to the pack tray 100 so as to allow expansion (or micro-expansion) of the pack cover 200 through a variable coupling structure of the pack cover 200 to the pack tray 100 in response to an increase in internal pressure or thermal energy due to venting gas inside the battery pack 1.

As shown in FIGS. 3 to 5, the variable coupling part 300 may include: an expansion bolt 310 having one end that protrudes outwards from the pack cover 200 and the other end that passes through the pack cover 200 and is coupled to at least one of the horizontal partition wall 110 and the vertical partition wall 120; an elastic member 320 provided between the pack cover 200 and one end of the expansion bolt 310 to elastically bias the pack cover 200 in one direction; and a coupling housing 330 provided on the pack cover 200 and surrounding at least a portion of the elastic member 320 and the expansion bolt 310.

The expansion bolt 310 is configured to be longer and thicker than the fixing bolt 250. Accordingly, one end of the expansion bolt 310, that is, a head 311, may protrude outwards from the pack cover 200, and the other end may pass through the pack cover 200 to be coupled to at least one of the horizontal partition wall 110 and the vertical partition wall 120. Referring to FIGS. 2 and 3, the expansion bolts 310 are located in three places along the horizontal partition wall 110, and one of them is provided in the center of the pack tray 100 where the horizontal partition wall 110 and the vertical partition wall 120 intersect each other.

The elastic member 320 is provided between the pack cover 200 and the head 311 of the expansion bolt 310. The elastic member 320 has one end supported by the head 311 of the expansion bolt 310 and the other end supported on the outer peripheral surface of the bolt coupling hole 210 on the pack cover 200. In addition, the elastic member 320 elastically biases the pack cover 200 in one direction (the Z direction in FIG. 1). The elastic member 320 may be a compression spring that provides resistance when the pack cover 200 is compressed toward the head 311 provided at one end of the expansion bolt 310.

Accordingly, if the pack cover 200 expands along the expansion bolt 310 when the internal pressure of the pack cover 200 increases due to the occurrence of an event, the elastic member 320 may act as a resistance force to reach an equilibrium state in which the pack cover 200 is bent to have a slight curvature, increasing the accommodation space 220 inside the battery pack 1, so the structural collapse of the battery pack 1 may be delayed.

In addition, when the event situation suddenly changes, for example, when the leakage pressure of venting gas increases rapidly or thermal energy is emitted explosively, the elastic member 320 may perform a kind of buffering function to cushion the impact.

In addition, compared to the existing bolt coupling between the pack tray 100 and the pack cover 200, stress concentration on the coupling portion (head 311) of the expansion bolt 310 or on the horizontal partition wall 110, the vertical partition wall 120, and the like of the pack tray 100 may also be reduced because the elastic member 320 is provided in the expansion bolt 310.

In addition, the elastic modulus of the elastic member 320 may increase toward the central area of the pack cover 200. Referring mainly to FIGS. 3 and 4, the elastic modulus of the elastic member 320 of the variable coupling part 300 disposed at the center of the pack cover 200 may be configured to be higher than the elastic modulus of the elastic member 320 of the left variable coupling part 300 (located between area 1 and area 2).

Therefore, when an event occurs in area 1, the expansion gap d between the pack tray 100 and the pack cover 200 may widen (expand) more in the left variable coupling part 300 than in the variable coupling part at the center. Alternatively, the expansion gap d may not be produced in the variable coupling part 300 at the center. In this case, the accommodation spaces 220 may be connected to each other in areas 1 and 2, resulting in the expansion of the accommodation space 220, and the expansion of the local accommodation space 220 may be performed while areas 1 and 3 are still separated and partitioned from each other.

On the other hand, if the variable coupling part 300 at the center of the pack cover 200 is also operated so that an expansion gap d is produced depending on the level of pressure and thermal energy inside the battery pack 1, the accommodation space 220 may fully expand to areas 3 and 4, in addition to areas 1 and 2.

The coupling housing 330 is provided on the pack cover 200, and the coupling housing 330 may be a tubular body having a guiding hole formed in the longitudinal direction thereof. Here, the thickness of the wall constituting the tubular body may be substantially the same as the thickness of the pack cover 200. In this embodiment, the coupling housing 330 may be manufactured integrally with the pack cover 200, and alternatively, the coupling housing 330 may be manufactured separately and then coupled to the top surface of the pack cover 200 by welding, bolting, or the like.

The coupling housing 330 is a part surrounding at least a portion of the elastic member 320 and the expansion bolt 310. That is, at least a portion of the expansion bolt 310 may be accommodated in the guiding hole 332 of the coupling housing 330 with the elastic member 320 inserted therein.

As a result, the elastic member 320 may be effectively compressed or expanded inside the guiding hole 332, and the elastic member 320 may be accommodated inside the coupling housing 330 to prevent contact with external foreign substances or dust, thereby providing a function of protecting the elastic member 320 and blocking foreign substances from entering the battery pack 1.

Referring to FIG. 6, a gas outlet 400 through which the venting gas is discharged may be provided on a wall of the pack tray 100. A ring member 420 is provided on the outer peripheral surface of the gas outlet 400, and a rupture membrane 410 is provided to be connected to the ring member 420. The ring member 420 is coupled to the outer surface of the pack tray 100 through a bolt 430 and is configured to withstand the internal pressure of the battery pack 1.

The rupture membrane 410 may have a discharge slit 411 configured to rupture when a pressure equal to or greater than the allowable pressure is applied thereto. The discharge slit 411 may be provided in the form of a 1-shaped or I-shaped incision in a dotted line. For example, if pressure equal to or greater than the designed allowable pressure is applied in the ignited battery module 10, the discharge slit 411 may rupture so that venting gas and thermal energy may be discharged.

For example, in FIG. 3, when an event occurs in the battery module 10 in area 1, the left variable coupling part 300 is operated due to an increase in internal pressure and allows communication with the accommodation space 220 in area 2, and thereafter, the discharge slit 411 ruptures so that venting gas and thermal energy are discharged through the left gas outlet 400 of the battery pack 1.

According to this embodiment, it is possible to delay structural collapse of the battery pack 1 as long as possible and block propagation of thermal energy by effectively dispersing and efficiently discharging the pressure and thermal energy inside the battery pack before venting gas and flame generated from the initially ignited battery module are emitted and transfer to neighboring battery modules 10 and the battery pack 1.

In addition, according to this embodiment, when the event situation suddenly changes, for example, when the internal pressure of the battery pack 1 increases rapidly or thermal energy is emitted explosively, the variable coupling part 300 may perform a buffering function to cushion the impact, thereby preventing the structural collapse of the battery pack 1.

In addition, compared to the existing bolt coupling between the pack tray 100 and the pack cover 200, stress concentration on the coupling portion (bolt head 311) of the expansion bolt 310 or on the horizontal partition wall 110, the vertical partition wall 120, and the like of the pack tray 100 may also be reduced because the elastic member 320 is provided in the expansion bolt 310, thereby reducing the structural maintenance cost of the battery pack 1.

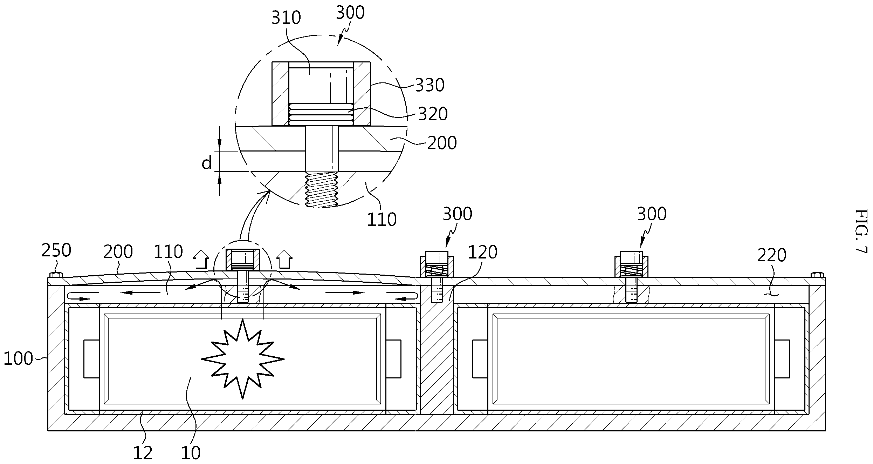

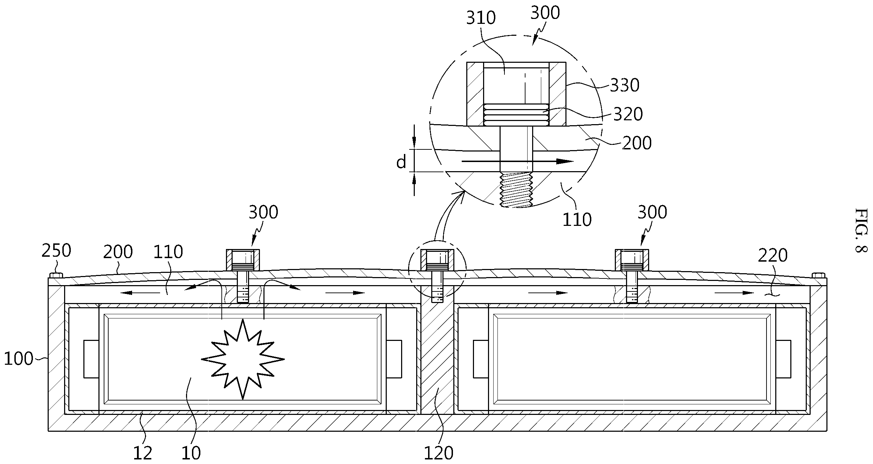

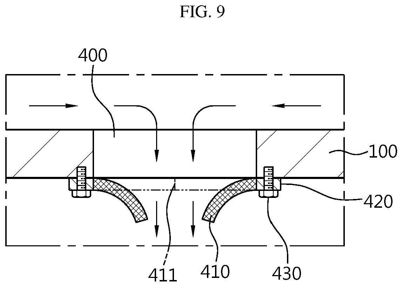

FIGS. 7 and 8 are diagrams schematically illustrating the operation state of a variable coupling part when venting gas and thermal energy spread in a battery pack according to an embodiment of the present disclosure, and FIG. 9 is a traverse cross-sectional view of a gas outlet and a rupture membrane in a battery pack according to an embodiment of the present disclosure.

Hereinafter, a process of easily discharging venting gas to the outside according to this embodiment will be described in detail with reference to FIGS. 1 to 7.

First, when an event occurs in the left battery module 10 in FIG. 7, venting gas, flame, and thermal energy such as high-temperature particles including electrode active materials and aluminum particles are emitted.

Then, the internal pressure of the accommodation space 220 increases, and the variable coupling part 300 operates due to the internal pressure equal to or greater than the allowable pressure. That is, the internal pressure becomes greater than the resistance of the elastic member 320, so the elastic member 320 contracts and the pack cover 200 expands. At this time, as the pack cover 200 rises and the coupling housing 330 rises, the head 311 of the expansion bolt 310 relatively moves downwards inside the coupling housing 330.

Accordingly, venting gas and the like are initially emitted only from the accommodation space 220 in area 1 in FIG. 3 to increase the internal pressure, and then the accommodation space 220 for venting gas and the like locally expands to area 2 due to the expansion gap d between the pack cover 200 and the horizontal partition wall 110. As a result, the pressure and thermal energy in the battery pack 1 may be effectively dispersed, thereby delaying the structural collapse of the battery pack 1 as long as possible.

Next, the venting gas and the like are discharged through the gas outlet 400 shown in FIG. 9. If the venting gas and thermal energy generated from area 1 in FIG. 3 spread to area 2 and if the internal pressure continues to increase to the allowable pressure or more, the discharge slit 411 may rupture to discharge the venting gas and the like, so that the internal pressure and thermal energy may be effectively dispersed and efficiently discharged from the battery pack 1, thereby delaying the structural collapse of the battery pack 1.

Here, the variable coupling part 300 at the center point of the battery pack 1 may be operated with priority over the discharge process. For example, the elastic modulus of the center point may be adjusted in consideration of the design pressure of the discharge slit 411, so that, as shown in FIG. 8, the variable coupling part 300 at the center point may be operated prior to the discharge slit 411 if the internal pressure reaches a predetermined pressure or more after the variable coupling parts 300 are operated in areas 1 and 2. In this case, when an event occurs in area 1 in FIG. 3, the accommodation space 220 may expand to area 2, area 3, and then area 4, and if the internal pressure continues to increase thereafter, venting gas and the like may be discharged through the discharge slit 411.

According to this operational configuration, it is possible to delay structural collapse of the battery pack 1 as long as possible and block propagation of thermal energy by effectively dispersing and efficiently discharging the pressure and thermal energy inside the battery pack 1 before venting gas and flame generated from the initially ignited battery module 10 are emitted and transfer to neighboring battery modules 10 and the battery pack.

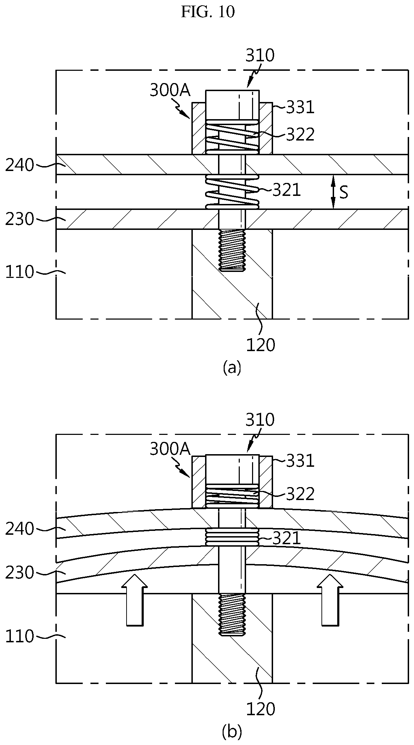

Subsequently, other embodiments of the battery pack 1 of the present disclosure will be briefly described with reference to FIGS. 10 to 12.

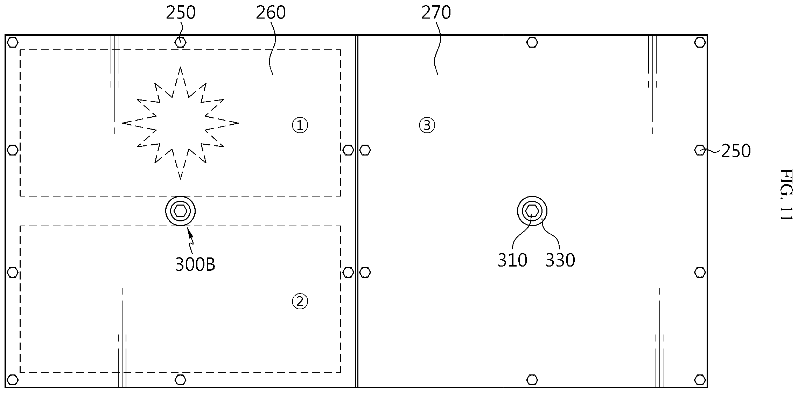

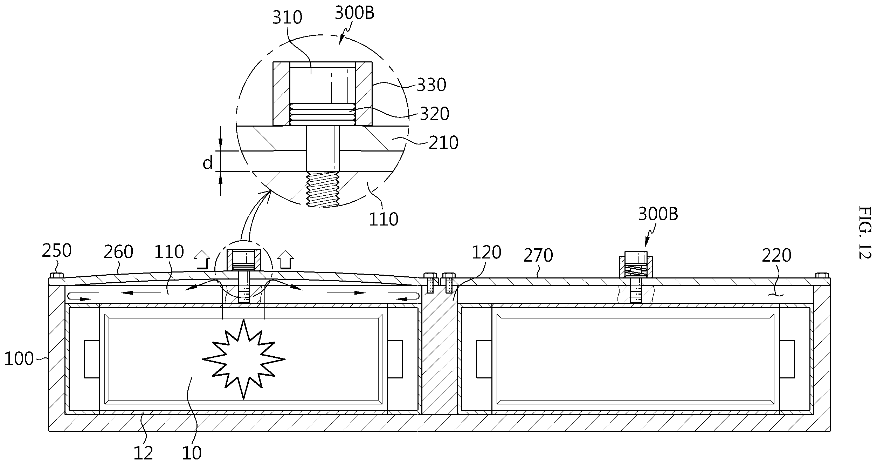

FIG. 10 is a diagram illustrating a double pack cover and a variable coupling part according to another embodiment of the present disclosure, FIG. 11 is a top view of a battery pack provided with left and right pack covers, respectively, according to another embodiment of the present disclosure, and FIG. 12 is a diagram schematically illustrating the operation state of a variable coupling part when venting gas and thermal energy spread in the battery pack in FIG. 11.

The same reference numbers as those in the previous drawings indicate the same members, and redundant descriptions of the same members will be omitted, and a description will be made based on the differences from the above-described embodiment.

Compared to the above-described embodiment, the battery pack according to another embodiment of the present disclosure includes a pack cover 200 in a double membrane structure in which the membranes are spaced a predetermined distance apart from each other. That is, as shown in FIG. 10, the pack cover 200 may include a first pack cover 230 adjacent to the battery module 10 and a second pack cover 240 disposed above the first pack cover 230 so as to be spaced a predetermined distance apart from the first pack cover 230.

In addition, the variable coupling part 300A may include: an expansion bolt 310 having one end coupled to the horizontal partition wall 110 and the vertical partition wall 120; a first elastic member 321 provided between the first pack cover 230 and the second pack cover 240 to space the first pack cover 230 and the second pack cover 240 apart from each other; a second elastic member 322 provided between the second pack cover 240 and the expansion bolt 310 to elastically bias the second pack cover 240 in one direction; and a coupling housing 331 provided on the second pack cover 240 and accommodating the second elastic member 322 and the expansion bolt 310 therein.

The first pack cover 230 and the second pack cover 240 are provided at a predetermined interval S, and the elastic member 321 is provided between the first pack cover 230 and the second pack cover 240 to space the first pack cover 230 and the second pack cover 240 apart from each other. In addition, the second elastic member 322 is provided between the second pack cover 240 and the expansion bolt 310 and serves to elastically bias the second pack cover 240 in one direction.

Since double pack covers 230 and 240 are provided, and since the first elastic member 321 and the second elastic member 322 in a double buffering structure are provided, when the event situation suddenly changes, for example, when the leakage pressure of venting gas increases rapidly or thermal energy is emitted explosively, the variable coupling part 300 may buffer the impact through a buffering function in the improved double buffering structure, thereby preventing structural collapse of the battery pack.

In addition, it is possible to delay structural collapse of the battery pack as long as possible and block propagation of thermal energy by effectively dispersing and efficiently discharging the pressure and thermal energy inside the battery pack before venting gas and flame generated from the initially ignited battery module 10 are emitted and transfer to neighboring battery modules 10 and the battery pack.

A battery pack according to another embodiment of the present disclosure, compared to the first embodiment, may include a pack cover 200 that is divided into a left pack cover 260 and a right pack cover 270, and exclude the variable coupling part 300 from the center point of the battery pack.

Accordingly, as shown in FIG. 11, when an event occurs in area 1, the left variable coupling part 300B may be operated so that the left pack cover 200 may expand, and if the allowable pressure is exceeded, gas may be discharged through the left gas outlet 400. Here, this embodiment differs from the first embodiment in that the pack cover 200 in the first embodiment is completely divided into the left pack cover 260 and the right pack cover 270, so that no accommodation space 220 expand from area 1 or area 2 to area 3.

Meanwhile, although not shown, the battery pack 1 according to the present disclosure may further include various devices for controlling the charging and discharging of the battery modules 10, such as a BMS (Battery Management System), a current sensor, a fuse, and the like.

The battery pack1 according to the present disclosure may be applied to vehicles such as electric vehicles or hybrid vehicles. That is, the vehicle according to the present disclosure may include the battery pack 1 according to the present disclosure. The battery pack 1 may be installed in the car body frame under the car seat or in the trunk space, and when installed in the vehicle, the arrangement order of the battery pack may be reversed if necessary.

Although terms indicating directions such as up, down, left, right, front, and back are used in this specification, it is obvious to those skilled in the art that these terms are only for convenience of explanation and may vary depending on the location of the target object or the location of the observer. As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a battery module;
a pack tray configured to accommodate the battery module therein and have a top opening;
a pack cover disposed on the top of the pack tray to seal an accommodation space where the battery module is accommodated; and
a variable coupling part configured to connect the pack tray and the pack cover to each other and elastically couple the pack cover to the pack tray such that the accommodation space is variably expanded in response to an increase in pressure when an event occurs.

2. The battery pack according to claim 1,
wherein the pack tray has a horizontal partition wall and a vertical partition wall configured to partition the interior of the pack tray, and
wherein the variable coupling part comprises:
an expansion bolt having one end that protrudes outwards from the pack cover and the other end that passes through the pack cover and is coupled to at least one of the horizontal partition wall and the vertical partition wall; and
an elastic member provided between the pack cover and one end of the expansion bolt to elastically bias the pack cover in one direction.

3. The battery pack according to claim 2,
wherein the variable coupling part further comprises a coupling housing provided on the pack cover and surrounding at least a portion of the elastic member and the expansion bolt.

4. The battery pack according to claim 3,
wherein the coupling housing is configured as a tubular body having a guiding hole formed in the longitudinal direction thereof.

5. The battery pack according to claim 3,
wherein the coupling housing is manufactured integrally with the pack cover.

6. The battery pack according to claim 2,
wherein the elastic member is a compression spring that provides resistance when the pack cover is compressed toward a head provided at one end of the expansion bolt.

7. The battery pack according to claim 2,
wherein an elastic modulus of the elastic member increases toward the central area of the pack cover.

8. The battery pack according to claim 5,
wherein a gas outlet through which the venting gas is discharged is provided on a wall of the pack tray.

9. The battery pack according to claim 8,
wherein a rupture membrane is provided in the gas outlet, and
wherein a discharge slit configured to rupture when an allowable pressure or more is applied thereto is provided in the rupture membrane.

10. The battery pack according to claim 9,
wherein the discharge slit is configured in the form of a 1-shaped or I-shaped incision in a dotted line.

11. The battery pack according to claim 1,
wherein the pack cover comprises a first pack cover adjacent to the battery module and a second pack cover disposed above the first pack cover so as to be spaced a predetermined distance apart from the first pack cover.

12. The battery pack according to claim 11,
wherein the variable coupling part comprises:
an expansion bolt having one end coupled to the horizontal partition wall and the vertical partition wall;
a first elastic member provided between the first pack cover and the second pack cover to space the first pack cover and the second pack cover apart from each other; a second elastic member provided between the second pack cover and the expansion bolt to elastically bias the second pack cover in one direction; and
a coupling housing provided on the second pack cover and accommodating the second elastic member and the expansion bolt therein.

13. The battery pack according to claim 1,
wherein the pack cover comprises:
a left pack cover provided on the left side of the vertical partition wall; and
a right pack cover provided on the right side of the vertical partition wall, and
wherein the variable coupling part is provided in the central area of the left pack cover and in the central area of the right pack cover.

14. A vehicle comprising the battery pack according to any one of claims 1 to 13.
